Europäisches Patentamt

European Patent Office

Office européen des brevets

(19)

(11) **EP 0 597 576 B1**

(12) **EUROPEAN PATENT SPECIFICATION**

(45) Date of publication and mention
of the grant of the patent:
**08.03.2000 Bulletin 2000/10**

(51) Int. Cl.[7]: **H04N 7/24**, H04N 5/92,
H04N 5/926, H04N 7/26,
H04N 7/30, H04N 7/54,
H04N 7/64

(21) Application number: **93306894.2**

(22) Date of filing: **01.09.1993**

(54) **Data transmission apparatus**

Vorrichtung zur Datenübertragung

Dispositif de transmission de données

(84) Designated Contracting States:
**DE FR GB**

(30) Priority: **02.09.1992 JP 25916892**
**03.09.1992 JP 26077392**

(43) Date of publication of application:
**18.05.1994 Bulletin 1994/20**

(73) Proprietor: **SONY CORPORATION**
**Tokyo 141 (JP)**

(72) Inventor:
**Kondo, Tetsujiro,**
**c/o Intellectual Property Div.**
**Shinagawa-ku, Tokyo 141 (JP)**

(74) Representative:
**Cotter, Ivan John et al**
**D. YOUNG & CO.**
**21 New Fetter Lane**
**London EC4A 1DA (GB)**

(56) References cited:
**EP-A- 0 318 244**          **EP-A- 0 430 631**
**US-A- 4 984 076**

**Description**

This invention relates to data transmission apparatus for transmitting (including recording and/or reproducing) code data, and is applicable for example to a digital video tape recorder (VTR) where digital video signals are encoded by block encoding to compress the amount of data so that the digital video signals are divided into small blocks and are processed block by block.

When digital video signals are recorded on a recording medium such as a magnetic tape, it is conventional to compress the digital video signals by high-efficiency encoding in order to make the transmission rate low enough to record/reproduce, because the data amount of the digital video signals is large. Block encoding, such as ADRC (Adaptive Dynamic Range Coding) and DCT (Discrete Cosine Transform), which divide digital video signals into small blocks and encodes them block by block, are known as high-efficiency encoding techniques.

EP-A-0 318 244 discloses an image data encoding apparatus in which pixel data is organised into blocks and processed to compress the amount of data. The pixel data of each block is processed to determine the minimum (MIN) and maximum (MAX) pixel values, the average value mo and encoded pixel data ID. The data MIN, MAX, mo and ID are transmitted in a serial data packet.

US-A-4,984,076 also encodes pixel data organised in blocks. The number of bits per block in a frame of N blocks is controlled by computing a value

$$A = \sum_{i=1}^{N} a_i$$

where $a_i$ is the difference between the maximum and minimum pixel values of a block $i$, and N is the number of blocks in a frame. The number of bits b$i$ per block $i$ is controlled according to

$$bi = \frac{a_i}{A} \times B$$

where B is the total number of bits allocated to a frame,

Neither EP-A-0 318 244 not US-A-4 984 076 is concerned with correcting errors in the data relating to a block.

ADRC is a high-efficient encoding which calculates a dynamic range defined by maximum and minimum levels of pixel data among plural pixels included in a two-dimensional block, and encodes the pixel data in accordance with the dynamic range, as described in Japanese Laid-open patent 61-144989. DCT is to cosine-transform pixels in a block, to re-quantize co-efficient data obtained by the cosine-transformation, and to encode them by variable-length encoding. Another encoding method has been suggested in which data averages of every blocks and the difference between each pixel data and the average in each block are vector-quantized.

Code outputs resulting from a block encoding do not have equal importance. In ADRC, if dynamic range information is unknown at the reproducing side, errors extend to all pixels of that block. Therefore, the dynamic range information which is obtained for every blocks is more important than the code signal which is obtained for every pixels. In one type of ADRC in which the number of bits for quantization varies depending upon the dynamic range, if there is an error about the dynamic range, the number of bits for quantization of that block cannot be identified at the receiving side. As a result, the boundaries between that block and other blocks become unknown so that errors extend to the other blocks. Among coefficient data generated in DCT encoding, a DC (direct current) component is more important than AC (alternating current) components. A refresh data in DPCM encoding is also important data.

When outputs of block encoding are recorded/reproduced by a digital VTR, for example, an error correction code is used to protect data against recording/reproducing errors. When an important data happens to have an error which the error correction code cannot correct, the error extends to the whole block. To cure the problem, the same important data is recorded twice at locations separate enough to be not subject to a burst error. However, redundancy would increase and efficiency of data compression would be lowered.

With respect to a block having an error in important data, the error of the important data is statistically presumed based upon spacial correlation between that block and peripheral blocks. In the more concrete, A least-squares method using the code data of the error block and the decoded data located at boundaries of the peripheral blocks may be also used to presume the important data in the error block. The maximum and minimum values of boundary data of the peripheral blocks may be used to presume the important data. The presumed important data is used for decoding. Even though the important data is presumed with high accuracy, original important data cannot be restored completely.

In addition, finding boundaries between each data block correctly is necessary to presume the important data. Therefore, if an error extends to several blocks, the important data cannot be presumed.

When digital video signals are recorded/reproduced in a digital VTR for example, it is also conventional to use error correction coding for correcting errors. As an error correction code, simple parity, Read-Solomon code and a combination of these and interleaving have been practically used.

However, when an error correction code is used, redundancy of data increases due to an increase in the number of parity bits in order to improve an error correction ability. When the error cannot be corrected by the error correction code, a conceal circuit would be necessary to interpolate pixel having an error with peripheral correct pixel data. Data such as a computer software generally has no correlation. However, video signals have a correlation in space and in time.

According to the present invention there is provided data encoding apparatus for encoding pixel data comprising

means for encoding blocks of pixels to compress the amount of data, the encoding means producing, for each block, encoded pixel data relating to individual pixels of the block and block data relating to all the encoded pixel data of the block and without which the encoded pixel data cannot be correctly decoded
characterised by
means for producing sum data representing a sum, or respective sums, of block data associated with a plurality of the said blocks, and
means for transmitting the, or each, said sum data separately from the said block data of the said plurality of blocks.

The term "transmitting" is used as a generic term for transmitting and recording and/or reproducing.

By providing the said sum data, an error in the block data may be corrected using the sum data and other, correct, block data. The number of bits needed to represent the sum data is less than the number of bits needed, for example, to record block data redundantly as in the prior art. By transmitting the sum data separately from the block data, the likelihood of it being lost with the block data is reduced.

In ADRC, the block data is dynamic range DR and minimum value MIN. In an embodiment of the invention the sum data of n dynamic range data DR and the sum data of n minimum data MIN are inserted into transmitted data. If one of DRs and MINs has an error and the sum data and the other important data have no error, the correct important data can be reproduced at the receiving side. Redundancy can be lower than when the same important data is recorded several times.

The invention will now be further described, by way of illustrative and non-limiting example, with reference to the accompanying drawings, in which:

Fig. 1 is a block diagram of an example of a recording circuit for a digital VTR to which the present invention can apply.
Fig. 2 shows an example of a recording pattern in an embodiment of the present invention.
Fig. 3 shows an example of a construction of a ADRC block in an embodiment of the present invention.
Fig. 4 shows an example of a construction of a macro block in an embodiment of the present invention.
Fig. 5 is a block diagram of an example of a reproducing circuit for a digital VTR to which the present invention can apply.
Fig. 6 is a block diagram of an example of a sum data generating circuit in an embodiment of the present invention.
Fig. 7 is a timing chart for explanation of a sum data generating circuit in an embodiment of the present invention.
Fig. 8 is a block diagram of another example of a mixed sum data generating circuit.
Fig. 9 is a timing chart for explanation of another example of a mixed sum generating circuit.
Fig . 10 is a block diagram of further example of a mixed sum generating circuit.
Fig. 11 is for explanation of further example of a mixed sum generating circuit.
Fig. 12 is a timing chart for explanation of further example of a mixed sum generating circuit.
Fig. 13 is a block diagram of still further example of a mixed sum generating circuit.
Fig. 14 is a timing chart for explanation of still further example of a mixed sum generating circuit.
Fig. 15 is a drawing for explanation of a mixed sum generating circuit which applies to quantized data.

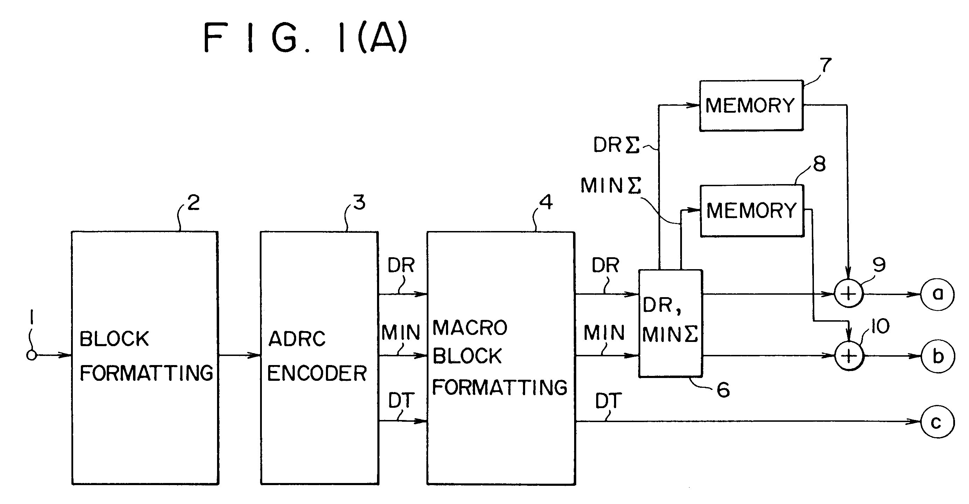

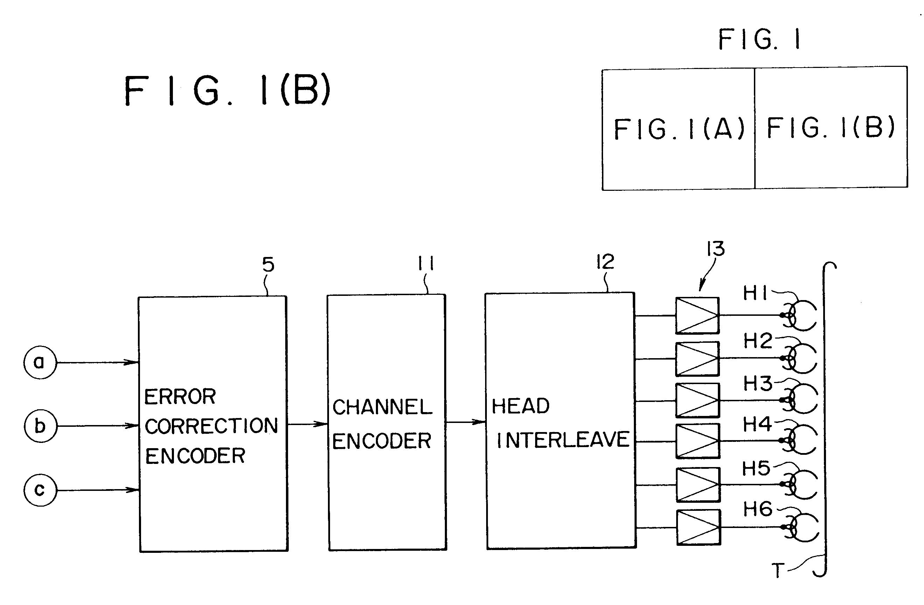

An embodiment of the present invention will be described hereinafter. Fig. 1 shows an embodiment, that is, an outline construction of signal processing for a digital VTR. Digital video signals are supplied from an input terminal 1. This input signals have 8-bit data for each pixel, for example. The input digital video signals are supplied to a block-formatting circuit 2. In this embodiment, block-formatting circuit 2 divides a valid area of one frame into blocks each having $4 \times 4$ pixels, $8 \times 8$ pixels, $4 \times 8$ pixels or similar.

Block-formatting circuit 2 supplies to an ADRC encoder 3 digital video signals which had been scan-converted in the order of the blocks. ADRC encoder 3 compresses pixel data block by block. ADRC encoder 3 supplies encoded output to a macro-block-making circuit 4. A macro block comprises a plurality of ADRC blocks which have been made by block-formatting circuit 2.

ADRC encoder 3 detects dynamic range DR and minimum value MIN of each block. ADRC encoder 3 requantizes the video data less minimum value MIN by a quantizing step. In ADRC using a fixed 4-bit length, quantizing step $\Delta$ can be obtained by dividing dynamic range DR by 16. The video data less the minimum value is divided by quantizing step $\Delta$. Integral part of quotient is a quantized data DT. Dynamic range DR, minimum value MIN and quantized data DT are output data of ADRC encoder 3. Each block has dynamic range DR and minimum value MIN as important data.

Macro block-formatting circuit 4 generates coded data of macro blocks. Quantized data DT of the macro blocks are supplied to an error correction encoder 5. Dynamic range DR and minimum value MIN of the macro blocks are supplied to an adding circuit 6. Adding circuit 6 generates the sum data $DR\Sigma$ of plural dynamic ranges DRs and the sum data $MIN\Sigma$ of plural minimum values MINs included in a macro block.

These sum data are supplied through memories 7 and 8 to mixing circuits 9 and 10. Original important data (DR, MIN), which have been through adding circuit 6, are supplied to mixing circuits 9 and 10. The outputs of mixing circuits 9 and 10 are supplied to error correction encoder 5.

The output data of ADRC encoder 3 is supplied to error correction encoder 5. Error correction encoder 5 generates a parity of an error correction code. A product code can be utilized as an example of the error correction code. In a product code, data are arranged as a matrix and error correction encoding applies to each of horizontal and vertical directions of the matrix. Block synch signal (SYNC) and ID signal are added to the code data and the parity. Record data having continual synch blocks are supplied to a channel encoder 11 which channel-encodes the record data in order to reduce a direct current component.

The output data of channel encoder 11 is supplied to a head interleave circuit 12. Head interleave circuit 12 generates six channels of record data. Head interleave circuit 12 supplies each channel of the record data through a recording amplifier 13 to rotary heads H1-H6. Head interleave circuit 12 interleaves the recording data among the plural channels. Rotary heads H1-H6 simultaneously form six tracks on a magnetic tape T.

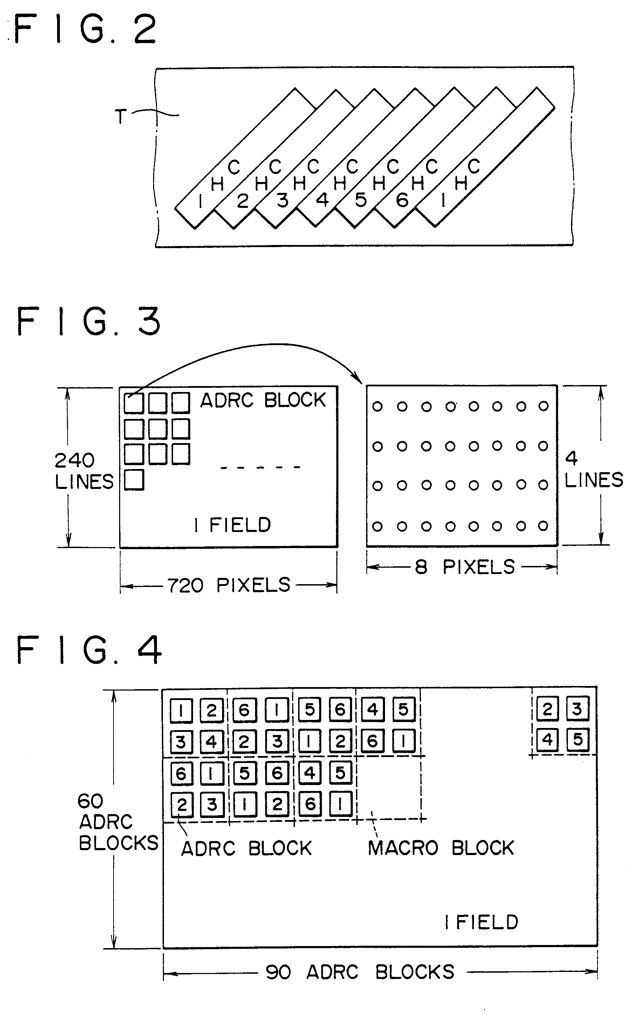

Fig. 2 shows a recording pattern formed on magnetic tape T. Respective slant tracks corresponding to respective heads H1 - H6 have respective references CH1 - CH6.

In this embodiment, as shown in Fig. 3, one ADRC block has $(4 \times 8)$ pixels. Assuming that a valid area of one field of video has (240 lines $\times$ 720 pixels), $(60 \times 90)$ ADRC blocks are formed in one field, as shown in Fig. 4. Further assuming that a macro block has $(2 \times 2 = 4)$ ADRC blocks, adding circuit 6 carries out the following adding calculations to generate the sum data $DR\Sigma$ and $MIN\Sigma$.

$$DR\Sigma = DR1 + DR2 + DR3 + DR4$$

$$MIN\Sigma = MIN1 + MIN2 + MIN3 + MIN4$$

When each important data is 8-bit data, 10-bit sum data is generated.

As shown in Fig. 4, head interleave circuit 12 distributes four important data and their sum data into different channels. For example, when each code data of four ADRC blocks of an upper-left cornered macro block in Fig. 4 is recorded in CH1, CH2, CH3, and CH4, respectively, the sum data $DR\Sigma$ and $MIN\Sigma$, which are the sum of the important data of these ADRC blocks, are recorded in the first channel (CH6) of the following macro block (right hand sided macro block).

In this way, the four important data and the sum data of them are recorded in different channels. Therefore, even if the whole data of the first channel cannot be reproduced due to a head clog, for example, the important data of the first channel can be corrected as follows.

$$DR1 = DR\Sigma - DR2 - DR3 - DR4$$

$$MIN1 = MIN\Sigma - MIN2 - MIN3 - MIN4$$

When important data of each block is recorded twice, as in prior art, additional 16 bits are necessary per one ADRC block. On the other hand, according to the present invention, since additional 20 bits are necessary per one macro block, only additional 5 bits are necessary one ADRC block and perfect correction can be achieved.

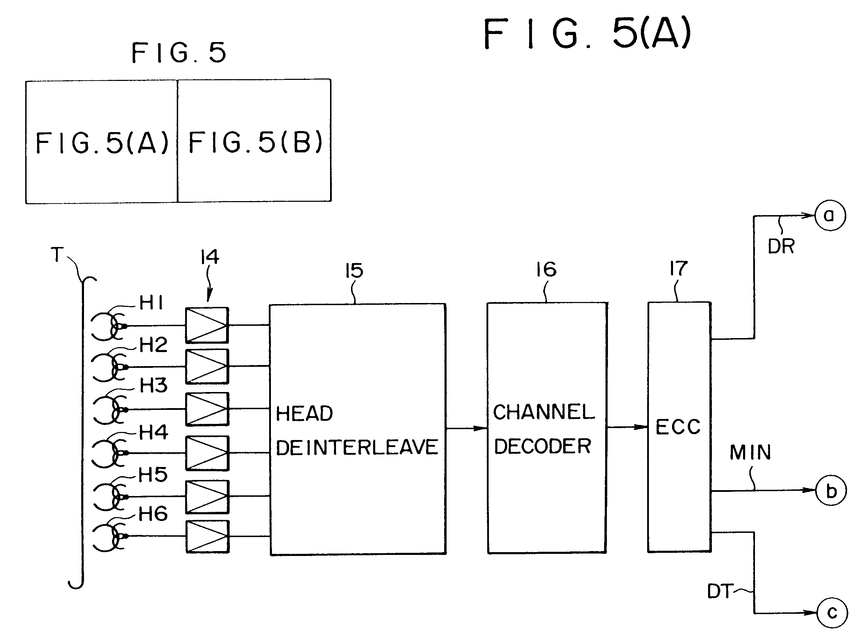

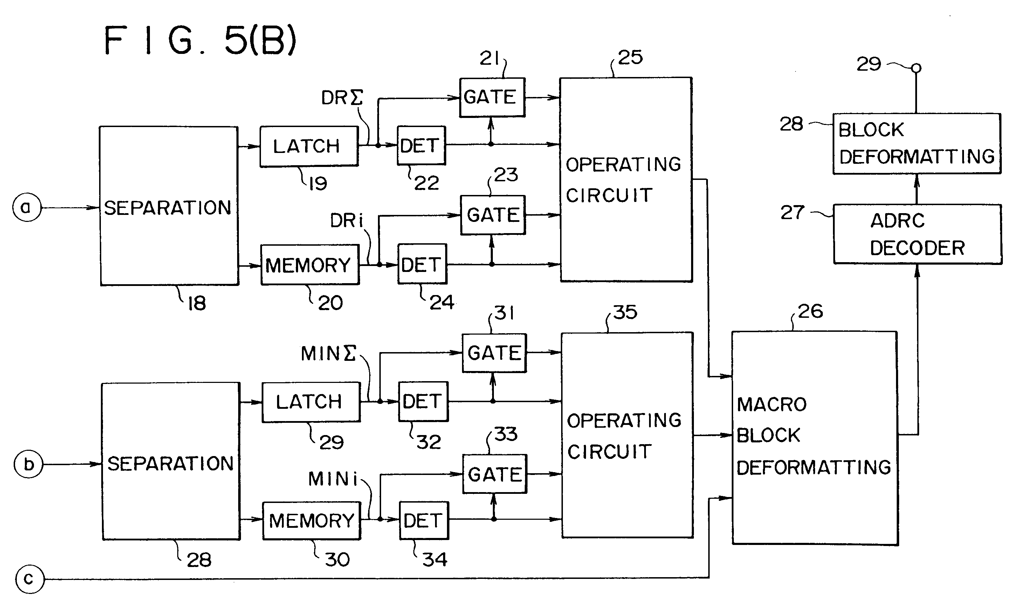

Referring to Fig. 5, a reproducing circuit which corresponds to the recording circuit as shown in Fig. 1 will be described. Each channel of reproduced data reproduced from magnetic tape T by six rotary heads H1-H6 is supplied through a reproducing amplifier 14 to a head de-interleave circuit 15. Head de-interleave circuit 15 de-interleaves the reproduced data which had been interleaved by head interleave circuit 12 at the recording side.

Head de-interleave circuit 15 supplies its output data to a channel decoder 16 which channel-decodes the supplied data. Channel decoder 16 supplies its output data to an error correction circuit 17 which decodes the product code. The output data of error correction circuit 17 includes, in addition to the reproduced data, an error flag to show whether an error exists after the error correction.

Important data DR and MIN included in the output data of error correction circuit 17 are corrected by the above algorithm. Dynamic range DR of a macro block is supplied to a separation circuit 18. Separation circuit 18 separates the sum data DRΣ and DRi. A latch 19 latches the sum data DRΣ and the error flag and a memory 20 stores DRi and the error flag.

Latch 19 supplies the sum data DRΣ through a gate circuit 21 to an operating circuit 25. Latch 19 also supplies the error flag to a detecting circuit 22 whose output is supplied to gate circuit 21 and operating circuit 25. Memory 20 supplies DRi and the error flag to a gate circuit 23 and a detecting circuit 24. Gate circuit 23 is controlled by a detecting signal from detecting circuit 24. Outputs of gate circuit 23 and detecting circuit 24 are supplied to operating circuit 25.

The same circuit construction as the above-explained one for the error correction of dynamic range DR is provided for the error correction of minimum value MIN. Circuit blocks for minimum value MIN will have reference numerals which are made up by adding ten and the reference numerals used for the circuit blocks for dynamic range DR. Explanation thereof will be omitted.

Corrected dynamic range from operating circuit 25, corrected minimum value MIN from operating circuit 35 and code data DT from error correction circuit 17 are supplied to a macro block deformatting circuit 26. Macro block deformatting circuit 26 deformats the supplied data into reproduced data of every ADRC block. The reproduced data of each ADRC block are supplied to an ADRC decoder 27 where ADRC decoding process is done.

In ADRC decoding where the bit number of quantized code is 4 bits, decoded data Li is generated for every pixel. Decoded data Li is expressed as follows :

$$Li = [(DR / 2^4 ) \times xi + MIN + 0.5] = [\Delta \times xi + MIN + 0.5]$$

Xi is a value of code signal, $\Delta$ is a quantizing step and [ ] means a gaussian mark. Calculation inside [ ] mark can be achieved by using a ROM, for example. ADRC decoder 27 has a function of adding minimum value MIN.

ADRC decoder 27 supplies its output to a block deformatting circuit 28. Block deformatting circuit 28 changes back the order of data from a block order to a raster-scan order. The reproduced data is obtained at an output terminal 29 of block deformatting circuit 28. If necessary, output terminal 29 may have an error interpolation circuit. The error interpolation circuit interpolates a pixel data having an error with peripheral pixel data.

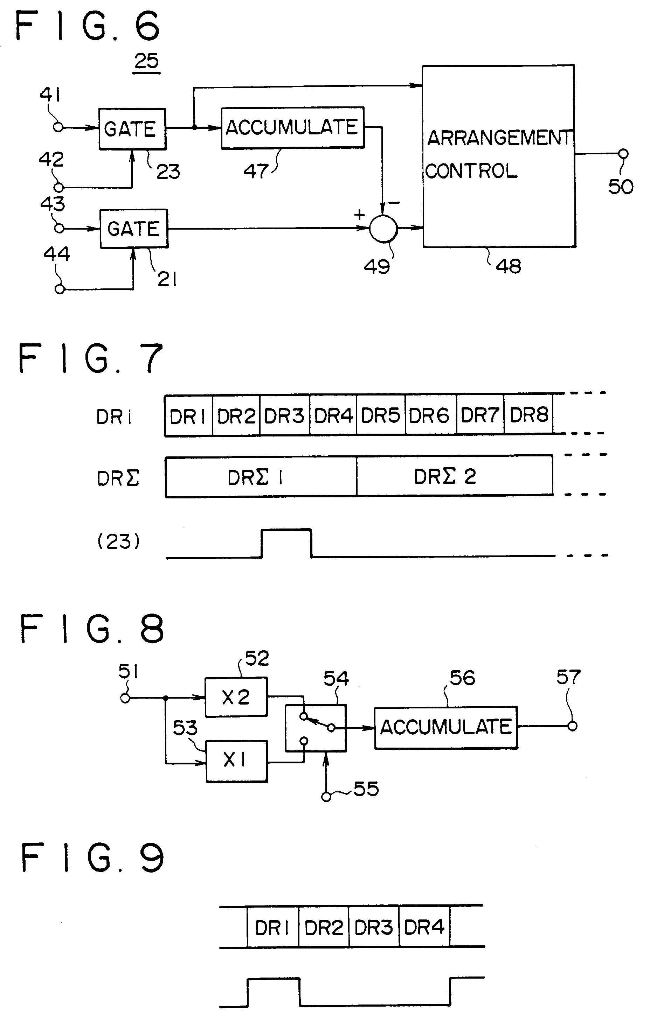

Fig. 6 shows one example of gate circuits 21 and 23 and operating circuit 25. DRi is supplied to an input terminal 41. The detect signal from detecting circuit 24 is supplied to an input terminal 42. The sum data DRΣ is supplied to an input terminal 43. The detect output from detecting circuit 22 is supplied to an input terminal 44. Gate circuit 23 supplies DRi to an accumulating circuit 47 and an arrangement control circuit 48. The accumulated output of accumulating circuit 47 and the output of gate circuit 21 are supplied to a subtracting circuit 49. Subtracting circuit 49 supplies its output to arrangement control circuit 48. Corrected important data (dynamic range DR) is derived at an output terminal 50 of arrangement control circuit 48.

As an example case, if DR3 among DR1 - DR4 has an error, as shown in Fig. 7, gate circuit 23 receives the detect signal which becomes high level at the location corresponding to DR3. When a control signal is high level, gate circuit 23 is OFF so that accumulating circuit 47 and arrangement control circuit 48 receive DRi other than DR3. Because it is assumed here that DRΣ has no error, DRΣ will pass through gate circuit 21.

Accumulating circuit 47 generates an accumulated output ( DR1 + DR2 + DR4 ). Accordingly, subtracting circuit 49 subtracts the accumulated output from DRΣ1 and generates a corrected DR3 at its output. Arrangement control circuit 48 substitutes DR3 in original DRi with the corrected one and generates it. Regarding minimum value MIN, MIN having an error is corrected by operating circuit 35 in the same manner as explained above. The correction is possible when the sum data has no error and only one of plural important data constituting the sum data has an error.

In the above embodiment, one macro block has (2×2) four ADRC blocks. It is possible to change the size of the macro blocks. It is also possible to record the sum data and the plural important data constituting the sum data at separate channels among plural channels so that an error correction ability against a burst error in one channel can be higher. For example, if one macro block comprises sixteen ADRC blocks and six channels of data can be recorded in parallel, sum data of 12-bit is generated as follows:

$$DR\Sigma = DR1 + DR2 + ------------ + DR16$$

$$MIN\Sigma = MIN1 + MIN2 + -------------- + MIN16$$

DR1 - DR6 and MIN1 - MIN6 are recorded into channels CH1 - CH6, respectively. DR7 - DR12 and MIN7 - MIN12 are recorded into channels CH1 - CH6. DR13 - DR16 are recorded into channels CH1 - CH4 and the sum data is recorded into channel CH5. There is only 1.5 bit increase per ADRC block. In this way, when the size of macro block becomes bigger, important data can be completely corrected with restrained increase of redundancy, when a burst error happens due to a tape damage or like that.

As explained above, when the sum data generated by simple adding is recorded, the bit number increases such as from 8-bit to 10-bit. One of methods to avoid this problem is to record the average (8 bits) of the sum data. When the average is used, an error is generated by rounding. In order to avoid the problem, the sum data of plural important data which had been weighted is averaged to form the average.

When one macro block comprises four ADRC blocks, the sum data is obtained by the following equation. The sum data of minimum values MIN is obtained in the same way.

$$DR\Sigma = (DR1 \times 2 + DR2 \times 1 + DR3 \times 1 + DR4 \times 1) / 5$$

Fig. 8 shows an example of circuits to achieve this calculation. DRi is supplied to an input terminal 51. DRi is then supplied to a circuit 52 for multiplying twice and a circuit 53 (merely having a buffer function). Circuits 52 and 53 supply their outputs to two input terminals of a switching circuit 54. Switching circuit 54 is controlled by a control signal supplied from a terminal 55.

As shown in Fig. 9, switching circuit 54 selects the output of circuit 52 at the timing of DR1 and selects the output of circuit 53 otherwise. Switching circuit 54 supplies its output to an accumulating circuit 56 and the sum data of weighted DRi is derived at an output terminal 57. Although not shown in Fig. 9, a division circuit for dividing by 5 is connected to the output of operating circuit 56.

In forming the average of the weighted sum, an important data which is more important than any other important data would have a bigger weighting factor. In forming four ADRC blocks, for example, if the first ADRC block comprises pixel data in the frame, the second ADRC block comprises the difference data of pixel data between the first and second ADRC blocks and the third and fourth ADRC blocks similarly comprise the difference data, important data DR1 and MIN1 of the first ADRC block comprising pixels having original pixel data are considered more important.

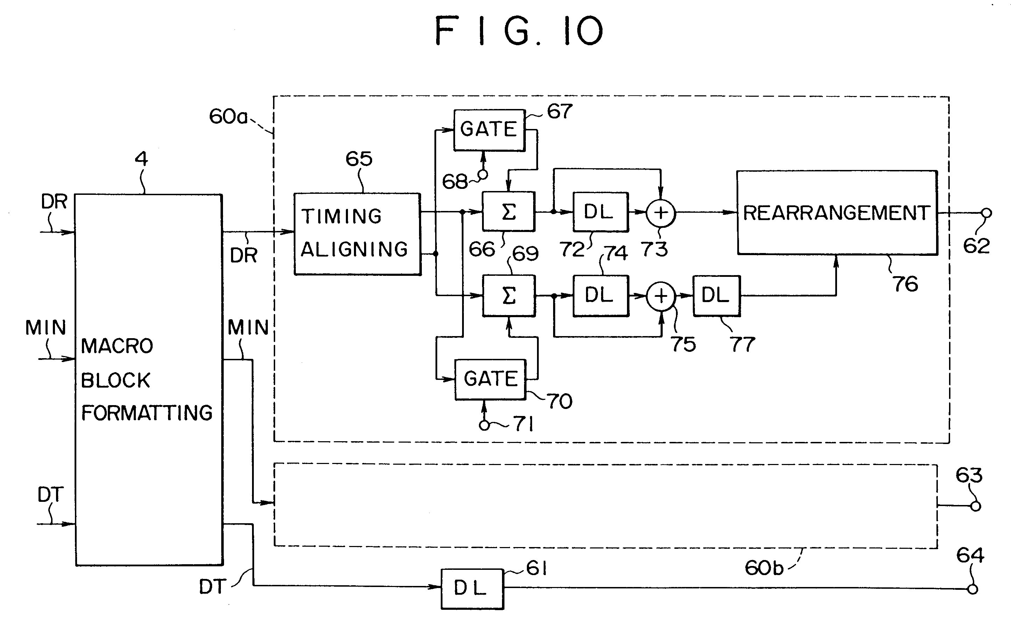

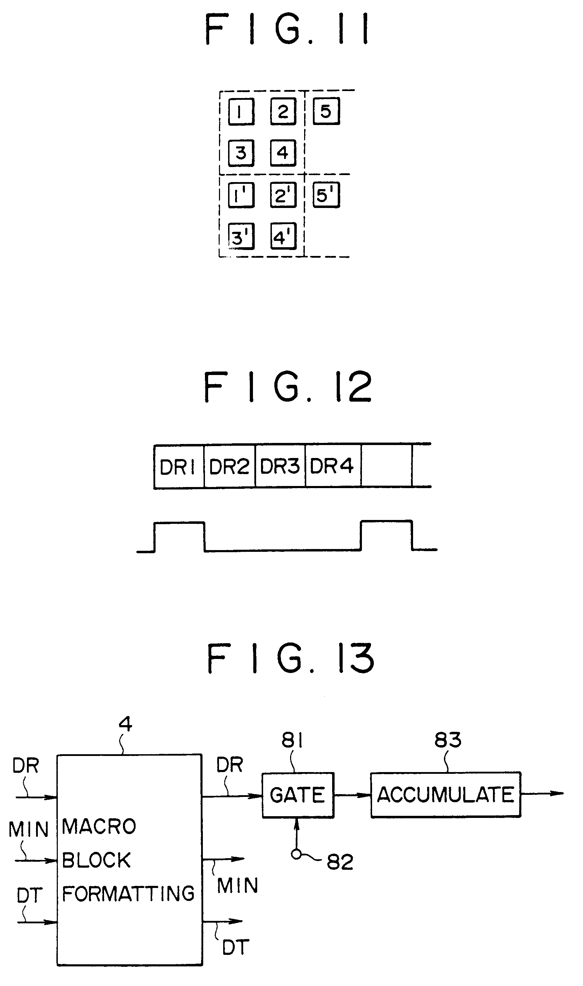

When plural sums data of important data are formed, some of important data constituting the sum data may be used to form both the sum data. Figs. 10 and 11 show such an example. As shown in Fig. 11, let us assume two macro blocks adjacent to each other in the vertical direction. If same reference numeral are put to important data generated from each ADRC block, the sum data are formed as follows :

$$DR\Sigma = DR1 + DR2 + DR3 + DR4 + DR1'$$

$$DR\Sigma' = DR1' + DR2' + DR3' + DR4' + DR1$$

The sum data of minimum values are similarly formed. In this way, when both DR1 and DR2 have errors, they can be corrected if other data have no error. Although the data DR1 and DR1' are both used in both equations, the data DR to be used in such a way may change regularly.

Referring to Fig. 10, an example of circuit construction for forming the sum data will be described. ADRC decoder supplies its code output to macro block-formatting circuit 4. Dynamic range DR, minimum value MIN and quantized data DT are generated by circuit 4 for every macro block. Dynamic range DR and minimum value MIN are supplied to sum data generating circuits 60a and 60b, respectively.

In mixed sum data generating circuit 60a, as shown in Fig. 11, a timing aligning circuit 65 aligns timings of two macro blocks adjacent to each other in the vertical direction. Timing aligning circuit 65 outputs from one output terminal dynamic range DRs of a macro block comprising ADRC blocks 1-4. Timing aligning circuit 65 outputs from the other output terminal dynamic range DR's of a macro block comprising ADRC blocks 1' - 4'. Timing aligning circuit 65 comprises four line memories.

DRs of one macro block are supplied to an adding circuit 66 and a gate circuit 70. DR's of the other macro block are supplied to an adding circuit 69 and a gate circuit 67. Through terminals 68 and 71, control signals are supplied to gate circuits 67 and 70 so that only DR1 passes through gate circuit 70, as shown in Fig. 12. Although not shown in figures, the control signal is supplied to gate circuit 67 so that only DR's pass through gate circuit 67.

Accordingly, adding circuit 66 generates a result of addition ( DR1 + DR2 + DR3 + DR4 + DR1' ) and adding circuit 69 generates a result of addition ( DR1' + DR2' + DR3' + DR4' + DR1 ). The output of adding circuit 66 is supplied to a mixing circuit 73 through a delay circuit 72 having a delay of one macro block and is mixed by mixing circuit 73 with an undelayed signal. Similarly, the output of adding circuit 69 is supplied through a delay circuit 74 to a mixing circuit 75 so that mixed sum data is obtained at the timing of the first ADRC block of the next macro block.

The output of mixing circuit 73 is supplied to a rearranging circuit 76 and the output of mixing circuit 75 is supplied through delay circuit 77 to rearranging circuit 76. Delay circuit 77 has a delay of two lines. At an output terminal 62 of rearranging circuit 76, an output data composed of important data and their mixed data is generated.

Regarding minimum value MIN, mixed sum data generating circuit 60b similar to the above-explained is provided. Minimum value MIN and their mixed sum data are derived from an output terminal 63. Quantized code DT is derived from an output terminal 64 after getting through a delay circuit 61 for timing.

By adding plural upper bits of important data to produce sum data, an increase in the number of bits forming the sum data can be restrained without degrading a quality of video. For example, when an macro block has sixteen ADRC blocks, the bit number forming the sum data increases from 8 bits to 12 bits in a case of simple adding. But, if upper 4 bits of sixteen DC components are added, the bit number of the sum data can remain to be 8 bits. If the number of bits selected downward from MSB, accuracy would be lowered, but nearly correct data from can be restored.

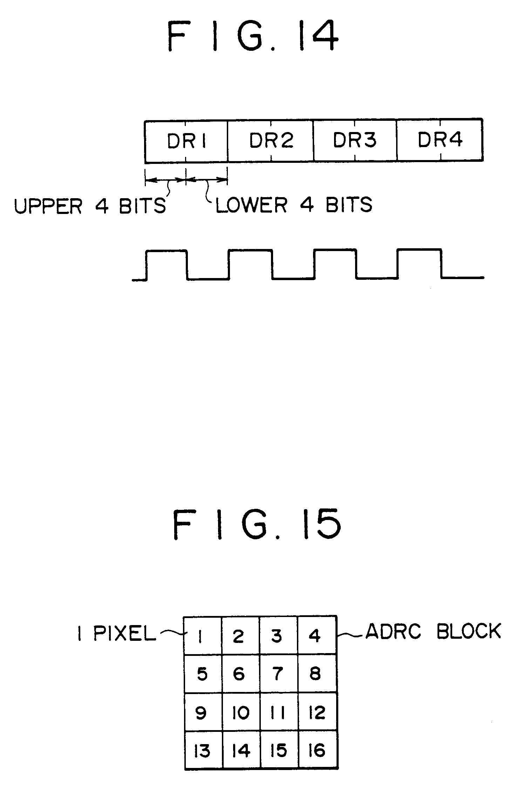

Figs. 13 and 14 are used to explain for forming the sum data from upper 4 bits. Fig. 13 shows a construction of circuits for dynamic range DR only. Dynamic range DR from macro block formatting circuit 4 is supplied to a gate circuit 81. Gate circuit 81 is controlled by a control signal supplied from an input terminal 82. The output of gate circuit 81 is supplied to an accumulating circuit 83.

Fig. 14 shows the control signal from input terminal 82 to control gate circuit 81. Serial bits of DR1, DR2, DR3, DR4, ..... are supplied to gate circuit 81 and the control signal is at high level during the upper 4 bits periods of DRi. Only during the period of the high level, gate circuit 81 is ON so that accumulating circuit 83 generates the sum data of the upper 4 bits of DRi.

Not only important data, sum data of pixel data may be formed. Fig. 15 shows a construction of $(4 \times 4)$ ADRC block. Reference numerals are put on quantized data DT (4 bits) of respective pixels. The sum data is formed according to the following equation:

$$DT\Sigma = DT1 + DT2 + DT3 + ........+ DT15 + DT16$$

Sum data $DT\Sigma$ of these quantized data is also transmitted.

According to this method, DR, MIN, $DT\Sigma$ and quantized data generated in one ADRC block are transmitted so that one error of quantized data can be corrected. In addition, errors of two quantized data can be interpolated. For example, when DT7' and DT10' have errors, interpolated data is formed by using peripheral pixel data. That is :

$$DT7^* = ( DT3 + DT6 + DT8 + DT11) / 4$$

$$DT10^* = ( DT6 + DT9 + DT11 + DT14) / 4$$

(Mark * means interpolation ). Ratio of these interpolated data is calculated and the sum data $DT\Sigma$ is apportioned according to the ratio. In this way, proper interpolation can be archived.

According to the above-described embodiments of the present invention, because sum data of plural important data are recorded, redundancy slightly increases due to the recording of the sum data. However, the redundancy is lower than when the same important data is recorded several times.

## Claims

1. A data encoding apparatus for encoding pixel data comprising

   means (2,3) for encoding blocks of pixels to compress the amount of data, the encoding means (2,3) producing, for each block, encoded pixel data (DT) relating to individual pixels of the block and block data (DR, MIN) relating to all the encoded pixel data of the block and without which the encoded pixel data cannot be correctly decoded
   characterised by
   means (6) for producing sum data representing a sum, or respective sums, of block data associated with a plurality of the said blocks, and
   means (11, 12, 13) for transmitting the, or each, said sum data separately from the said block data of the said plurality of blocks, thereby enabling error correction at the receiving side.

2. Apparatus according to claim 1,wherein the encoding means (2,3) produces a plurality of block data (DR, MIN) for each block, the sum data providing mean (6) produces respective sum data representing the sums of the respective block data associated with the plurality of blocks, and

   the transmitting means (11, 12, 13) transmits the respective sum data separately from the block data of the said plurality of blocks.

3. Apparatus according to claim 1 or 2, wherein the or each said sum data is a weighted average of the or each respective block data associated with the plurality of blocks.

4. Apparatus according to claim 1, 2 or 3, wherein a said block data is represented by $\underline{n}$ bits and the corresponding sum data represents the sum of the block data of the said plurality of blocks wherein each block data of the sum is represented by its $\underline{m}$ most significant bits where $\underline{m}$ is less than $\underline{n}$.

5. Apparatus according to claim 1, 2, 3 or 4, wherein the said blocks are organised by the encoding means into units of $\underline{b}$ blocks, and the said plurality of blocks comprises $\underline{b}$ blocks from one unit plus at least one block from another unit.

6. Apparatus according to claim 5, wherein sum data is produced for each of a said plurality of blocks in succession, each plurality comprising the $\underline{b}$ blocks of one unit and at least one block selected from the $\underline{b}$ blocks of another unit, the selection changing regularly.

7. Apparatus according to any preceding claim, wherein the transmitting means (11, 12, 13) comprises means for recording the sum data, encoded pixel data and block data on a recording medium.

8. Apparatus according to claim 7, wherein the recording means comprises inter leaving means (12) for distributing the block data of a said plurality of blocks and the corresponding sum data into different recording channels.

9. Apparatus according to any one of claims 1 to 6, wherein the transmitting means transmits the, or each, said sum data in time and space different from that of the corresponding block data.

10. Apparatus according to any one of claims 1 to 6, wherein the transmitting means transmits the, or each, said sum data in a channel different to channels in which the corresponding block data are transmitted.

11. Apparatus according to claim 10, wherein the number of channels is greater than the number of blocks in the said plurality of blocks.

12. Apparatus according to any one of claims 1 to 11, in combination with means (14-17) for receiving the transmitted data,

   means for detecting an error in the block data associated with a block of a said plurality of blocks, and
   means responsive to the detection of said error to restore the erroneous block data from the sum data and the other block data of the said plurality of blocks.

13. Apparatus according to any one of claims 1 to 12, further comprising

   means for forming sum data (DT$\Sigma$) representing the sum of the encoded pixel data (DT) of a said block,
   the transmitting means (11, 12, 13) being for also transmitting the said sum data of the encoded pixel data.

14. Apparatus according to claim 13, when dependent on claim 12, comprising

   means for detecting an error in encoded pixel data of a block, and
   error correcting means responsive to a detected error in pixel data for correcting the erroneous encoded pixel data using the sum data representing the sum of the encoded pixel data of the block and the other encoded pixel data of the block.

15. Apparatus according to claim 14, wherein the error correcting means is responsive to the detection of a plurality of erroneous encoded pixel data of a block to produce, for each erroneous encoded pixel data, a value interpolated from adjacent pixel data of the block, and to correct the erroneous pixel data in dependence upon the sum data representing the sum of the encoded pixel data of the block and the interpolated values.

**Patentansprüche**

1. Datenkodier-Vorrichtung zum Kodieren von Pixeldaten, die

   ein Mittel (2, 3) zum Kodieren von Blöcken von Pixeln umfasst, um die Menge von Daten zu komprimieren, wobei das Kodierungs-Mittel (2, 3) für jeden Block kodierte Pixeldaten (DT), die sich auf individuelle Pixel des Blocks beziehen, und Blockdaten (DR, MIN), die sich auf alle der kodierten Pixeldaten des Blocks beziehen, erzeugt, ohne welche die kodierten Pixeldaten nicht korrekt dekodiert werden können,
**gekennzeichnet** durch

ein Mittel (6) zum Erzeugen von Summendaten, die eine Summe oder jeweilige Summen von Blockdaten repräsentieren, die einer Vielzahl von Blöcken zugeordnet sind, und
ein Mittel (11, 12, 13) zum Übertragen der oder aller der Summendaten getrennt von den Blockdaten der Vielzahl von Blöcken, um dadurch auf der empfangenden Seite eine Fehlerkorrektur zu ermöglichen.

2. Vorrichtung nach Anspruch 1, bei der das Kodierungs-Mittel (2, 3) eine Vielzahl von Blockdaten (DR, MIN) für jeden Block erzeugt, das Summendatenerzeugungs-Mittel (6) jeweilige Summendaten erzeugt, welche die Summen der jeweiligen Blockdaten repräsentieren, die der Vielzahl von Blöcken zugeordnet sind, und das Übertragungs-Mittel (11, 12, 13) die jeweiligen Summendaten getrennt von den Blockdaten der Vielzahl von Blöcken überträgt.

3. Vorrichtung nach Anspruch 1 oder 2, wobei die oder alle der Summendaten ein gewichteter Mittelwert der oder aller der Blockdaten sind, die der Vielzahl von Blöcken zugeordnet sind.

4. Vorrichtung nach Anspruch 1, 2 oder 3, wobei die Blockdaten durch n bits dargestellt werden und die entsprechenden Summendaten die Summe der Blockdaten der Vielzahl von Blöcken repräsentieren, wobei alle Blockdaten der Summe durch deren m höchstwertige Bits repräsentiert werden, wobei m kleiner als n ist.

5. Vorrichtung nach Anspruch 1, 2, 3 oder 4, wobei die Blöcke durch das Kodierungs-Mittel in Einheiten von b Blöcken organisiert werden und die Vielzahl von Blöcken b Blöcke aus einer Einheit plus zumindest einen Block aus einer anderen Einheit umfassen.

6. Vorrichtung nach Anspruch 5, wobei die Summendaten für jeden der Vielzahl von Blöcken hintereinander erzeugt werden, wobei jede Vielzahl die b Blöcke einer Einheit und zumindest einen Block umfasst, der aus den b Blöcken einer anderen Einheit ausgewählt ist, wobei sich die Auswahl regelmäßig ändert.

7. Vorrichtung nach einem der vorhergehenden Ansprüche, bei der das Übertragungs-Mittel (11, 12, 13) ein Mittel zum Aufzeichnen der Summendaten, der kodierten Pixeldaten und der Blockdaten auf einem Aufzeichnungsmedium umfasst.

8. Vorrichtung nach Anspruch 7, bei der das Aufzeichnungs-Mittel ein Verschachtelungs-Mittel (12) zum Verteilen der Blockdaten einer Vielzahl von Blöcken und der entsprechenden Summendaten auf verschiedene Aufzeichnungskanäle umfasst.

9. Vorrichtung nach einem der Ansprüche 1 bis 6, bei der das Übertragungs-Mittel die oder alle der Summendaten zeit- und raumverschieden von den entsprechenden Blockdaten überträgt.

10. Vorrichtung nach einem der Ansprüche 1 bis 6, bei der das Übertragungs-Mittel die oder alle der Summendaten in einem Kanal überträgt, der von den Kanälen verschieden ist, in denen die entsprechenden Blockdaten übertragen werden.

11. Vorrichtung nach Anspruch 10, wobei die Anzahl von Kanälen größer als die Anzahl von Blöcken in der Vielzahl von Blöcken ist.

12. Vorrichtung nach einem der Ansprüche 1 bis 11, in Kombination mit

einem Mittel (14 - 17) zum Empfangen der übertragenen Daten,
einem Mittel zum Erfassen eines Fehlers in den Blockdaten, die einen Block der Vielzahl von Blöcken zugeordnet sind, und
einem Mittel, das auf die Erfassung des Fehlers anspricht, um die fehlerhaften Blockdaten aus den Summendaten und den anderen Blockdaten der Vielzahl von Blöcken wiederherzustellen.

13. Vorrichtung nach einem der Ansprüche 1 bis 12, die ferner

ein Mittel zum Bilden von Summendaten (DT$\Sigma$) umfasst, welche die Summe der kodierten Pixeldaten (DT) eines Blocks repräsentieren,

wobei das Übertragungs-Mittel (11, 12, 13) auch zum Übertragen der Summendaten der kodierten Pixeldaten vorgesehen ist.

**14.** Vorrichtung nach Anspruch 13, wenn dieser von Anspruch 12 abhängig ist, die umfasst:

ein Mittel zum Erfassen eines Fehlers in den kodierten Pixeldaten eines Blocks und
ein Fehlerkorrektur-Mittel, das auf einen erfassten Fehler in den Pixeldaten zum Korrigieren der fehlerhaften kodierten Pixeldaten unter Benutzung der Summendaten anspricht, welche die Summe der kodierten Pixeldaten des Blocks und der anderen kodierten Pixeldaten des Blocks repräsentieren.

**15.** Vorrichtung nach Anspruch 14, bei der das Fehlerkorrektur-Mittel auf die Erfassung einer Vielzahl von fehlerhaften kodierten Pixeldaten eines Blocks anspricht, um für alle fehlerhaften kodierten Pixeldaten einen Wert zu erzeugen, der aus benachbarten Pixeldaten des Blocks interpoliert ist, und um die fehlerhaften Pixeldaten in Abhängigkeit von den Summendaten, welche die Summe der kodierten Pixeldaten des Blocks repräsentieren, und der interpolierten Werte zu korrigieren.

**Revendications**

**1.** Appareil de codage de données pour coder des données de pixel comprenant

un moyen (2, 3) pour coder des blocs de pixels pour compresser la quantité de données, le moyen de codage (2, 3) produisant, pour chaque bloc, des données de pixel codées (DT) concernant des pixels individuels de bloc et des données de bloc (DR, MIN) concernant toutes les données de pixel codées de bloc et sans lesquelles les données de pixel codées ne peuvent pas être correctement décodées
caractérisé par
un moyen (6) pour produire des données de somme représentant une somme, ou des sommes respectives, des données de bloc associées à une pluralité desdits blocs, et
un moyen (11, 12, 13) pour transmettre lesdites ou chaque dite données de somme séparément à partir desdites données de bloc de ladite pluralité de blocs, validant ainsi une correction d'erreur du côté de la réception.

**2.** Appareil selon la revendication 1, dans lequel le moyen de codage (2, 3) produit une pluralité de données de bloc (DR, MIN) pour chaque bloc, le moyen de fourniture de données de somme (6) produit des données de somme respectives représentant les sommes des données de blocs respectives associées à la pluralité de blocs, et

le moyen de transmission (11, 12, 13) transmet les données de somme respectives séparément à partir des données de bloc de ladite pluralité de blocs.

**3.** Appareil selon la revendication 1 ou 2, dans lequel lesdites ou chaque dite données de somme sont une moyenne pondérée des données ou de chaque données de bloc respectives associées à la pluralité de blocs.

**4.** Appareil selon la revendication 1, 2 ou 3, dans lequel une desdites données de bloc est représentée par $\underline{n}$ bits et les données de somme correspondantes représentent la somme des données de bloc de ladite pluralité de blocs où chaque donnée de bloc de la somme est représentée par ses $\underline{m}$ bits de poids le plus fort lorsque $\underline{m}$ est plus petit que $\underline{n}$.

**5.** Appareil selon la revendication 1, 2, 3 ou 4, dans lequel lesdits blocs sont organisés par le moyen de codage en unité de $\underline{b}$ blocs, et ladite pluralité de blocs comprend $\underline{b}$ blocs à partir d'une unité, plus au moins un bloc à partir d'une autre unité.

**6.** Appareil selon la revendication 5, dans lequel des données de somme sont produites pour chacune d'une dite pluralité de blocs successivement, chaque pluralité comprenant $\underline{b}$ blocs d'une unité et au moins un bloc sélectionné à partir de $\underline{b}$ blocs de l'autre unité, la sélection changeant régulièrement.

**7.** Appareil selon l'une quelconque des revendications précédentes, dans lequel le moyen de transmission (11, 12, 13) comprend un moyen pour enregistrer des données de somme, des données de pixel codées et des données de bloc sur un support d'enregistrement.

**8.** Appareil selon la revendication 7, dans lequel le moyen d'enregistrement comprend un moyen d'entrelacement (12) pour distribuer les données de bloc d'une dite pluralité de blocs et les données de somme correspondantes dans différents canaux d'enregistrement.

**9.** Appareil selon l'une quelconque des revendications 1 à 6, dans lequel le moyen de transmission transmet ledit ou chaque dite données de somme différent dans le temps et dans l'espace de celles des données de bloc correspondantes.

**10.** Appareil selon l'une quelconque des revendications 1 à 6, dans lequel le moyen de transmission transmet lesdites ou chaque dite données de somme dans un canal différent pour des canaux dans lesquels les données de bloc correspondantes sont transmises.

**11.** Appareil selon la revendication 10, dans lequel le nombre de canaux est supérieur au nombre de blocs dans ladite pluralité de blocs.

**12.** Appareil selon l'une quelconque des revendications 1 à 11, en combinaison avec un moyen (14 à 17) pour recevoir les données transmises,

un moyen pour détecter une erreur dans les données de bloc associées à un bloc de ladite pluralité de blocs, et
un moyen sensible à la détection de ladite erreur pour restaurer les données de bloc erronées à partir des données de somme et les autres données de bloc de ladite pluralité de blocs.

**13.** Appareil selon l'une quelconque des revendications 1 à 12, comprenant en outre

un moyen pour former des données de somme (DT$\Sigma$) représentant la somme des données de pixel codées (DT) dudit bloc,
le moyen de transmission (11, 12, 13) étant pour transmettre aussi lesdites données de somme des données de pixel codées.

**14.** Appareil selon la revendication 13, lorsqu'elle dépend de la revendication 12, comprenant

un moyen pour détecter une erreur dans des données de pixel codées d'un bloc, et
un moyen de correction d'erreur sensible à une erreur détectée dans des données de pixel pour corriger les données de pixel codées erronées en utilisant les données de somme représentant la somme des données de pixel codées du bloc et les autres données de pixel codées du bloc.

**15.** Appareil selon la revendication 14, dans lequel le moyen de correction d'erreur est sensible à la détection d'une pluralité de données de pixel codées erronées d'un bloc pour produire, pour chaque données de pixel codées erronées, une valeur interpolée à partir des données de pixel adjacentes du bloc, et pour corriger les données de pixel erronées en dépendance des données de somme représentant la somme des données de pixel codées du bloc et des valeurs interpolées.

# F I G. I(A)

EP 0 597 576 B1

# FIG. I

| FIG. I(A) | FIG. I(B) |
|-----------|-----------|

# FIG. I(B)

# F I G. 2

# F I G. 3

# F I G. 4

14

# FIG. 5

| FIG.5(A) | FIG.5(B) |
|----------|----------|

# FIG. 5(A)

EP 0 597 576 B1

# F I G. 5(B)

EP 0 597 576 B1

# F I G. 6

# F I G. 7

# F I G. 8

# F I G. 9

# F I G. 10

EP 0 597 576 B1

# F I G. II

# F I G. 12

# F I G. 13

# F I G. 14

| DR1 | DR2 | DR3 | DR4 |
|-----|-----|-----|-----|

UPPER 4 BITS      LOWER 4 BITS

# F I G. 15

I PIXEL —|  1 |  2 |  3 |  4 |— ADRC BLOCK

| 1 | 2 | 3 | 4 |
|----|----|----|----|
| 5 | 6 | 7 | 8 |
| 9 | 10 | 11 | 12 |
| 13 | 14 | 15 | 16 |